# EUROPEAN PATENT SPECIFICATION

(11) **EP 2 115 310 B1**
(45) Date of publication and mention of the grant of the patent: **01.01.2014**
(21) Application number: 07732570.2
(22) Date of filing: 26.04.2007
(51) Int. Cl.: F16C 33/56, F16C 33/44, F16C 33/20

(54) **BEARINGS**
LAGER
ROULEMENTS

(30) Priority: 05.02.2007 TW 96202104 U; 06.03.2007 CN 200720004985 U; 21.03.2007 IN MU05192007; 05.04.2007 GB 0706707
(43) Date of publication of application: 11.11.2009
(73) Proprietor: Victrex Manufacturing Limited, Tornton Cleveleys Lancashire FY5 4QD (GB)
(72) Inventor: HSUEH, Li-Yu, Taipei (TW); KNOWLES, Andrew, Thornton Cleveleys Lancashire FY5 4QD (GB); LI, Tzuli, Sin-Jhuang City Taipei County 242 (TW)
(74) Representative: Brierley, Anthony Paul
(86) International application number: PCT/GB2007/001533
(87) International publication number: WO 2008/096097

(56) References cited:
- EP-A- 0 492 660
- WO-A-02/10320
- WO-A-03/027522
- WO-A-2005/023893
- DE-A1- 3 736 292
- GB-A- 2 297 587
- US-A- 2 860 111
- US-A- 3 527 507
- US-A- 4 007 973
- US-A- 4 592 782

## Description

This invention relates to bearings and particularly, although not exclusively, relates to roller bearings.

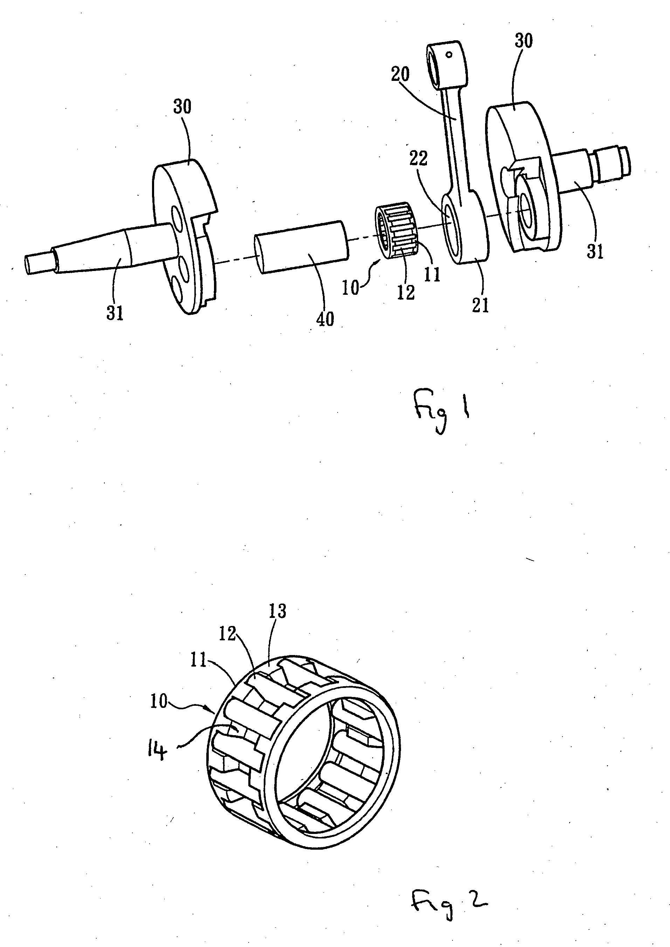

Roller bearings are widely used on crankshaft/connecting rod mechanisms. By way of example, reference is made to figure 1 which illustrates use of a conventional roller bearing 10 in an internal combustion engine of a motorcycle, lawn mower or the like. The bearing is located at the junction of a hole 21, at one end of a connecting rod 20, and a crank pin 40. The bearing 10 is positioned eccentrically to a crankshaft 30 which consists of two circular disks. The crankshaft 30 has an axle 31 on each of two sides. The roller bearing 10 has rolling elements 12 and cage 11. The hole 21 has an inner surface serving as an outer raceway 22 for the roller bearing 10. The crank pin 40 serves as an inner raceway for the roller bearing 10.

Referring to figures 2 to 5, the roller bearings 10 include an annular cage 11 made of metal and rolling elements 12. Commonly used cages 11 may be in the forms of a one piece cage 11 with recesses 14 in outer surface 13 (see FIG. 2); or a one piece type cage 11 with a flat outer surface 13 (see FIG. 3); or a split type cage 11 (consisting of two semi-circular parts) with recesses in outer surface 13 (see FIG. 4); or a split type cage 11 with a flat outer surface 13 (see FIG. 5).

As the roller bearing 10 for the crankshaft/ connecting rod mechanism is located at the junction of connecting rod 20 and the crank pin 40, when the crankshaft 30 rotates, the roller bearing 10 is driven to perform two types of motion: first, spinning about the crank pin 40 as the centre; second, moving in association with crank pin 40 to rotate about the axle 31 of the crankshaft 30.

As the roller bearing 10 is eccentric relative to the axle 31 of the crankshaft 30, the second motion generates a centrifugal force on the roller bearing 10. As a result, the cage 11 is constantly rubbing against the inner surface of the hole 21 that also serves as the outer raceway 22 of the bearing. The rubbing will cause wear on the outer raceway 22. To reduce the wear, the conventional method is to electroplate a copper layer or a silver layer on a copper layer on the outer surface 13 of the cage 11. Such an approach allows the softer copper/silver layer to be consumed to defer the wear on the outer raceway 22.

However, the process of electroplating a copper layer or a silver layer on the copper layer is expensive. Moreover electroplating processes may generate hydrogen embrittlement (HE) problems which may cause fracture of cage 11 while the bearing is running.
US-A-2860111 discloses a thermosetting resinous composition for forming self-lubricating bearings.
EP-A-492 660 discloses an assembly according to the pre-characterizing part of claim 1.

It is an object of the present invention to address the abovedescribed problems.

According to a first aspect of the invention, there is provided an assembly as described claim 1.

Said composition has a Rockwell hardness (M scale) in the range 80 to 130.

Said first polymeric material may be selected from a polyamide, polyetherimide (PEI), polyacetal, polyester (e.g. polyethylene terephthalate or polybutylene terephthalate), polycarbonate, polyphenylene sulphide or a polymeric material of a type which includes:
(a) phenyl moieties;
(b) ketone and/or sulphone moieties; and
(c) ether moieties.

Said first polymeric material may have a Tg of less than 260°C, for example less than 220°C or less than 200°C. In some cases, the Tg may be less than 190°C, 180°C or 170°C.

Said first polymeric material suitably has a melt viscosity (MV) of at least 0.06 kNsm⁻², preferably has a MV of at least 0.08 kNsm⁻², more preferably at least 0.09 kNsm⁻².

MV is suitably measured using capillary rheometry operating at 400°C at a shear rate of 1000s⁻¹ using a tungsten carbide die, 0.5x3.175mm.

Said first polymeric material may have a MV of less than 1.00 kNsm⁻², preferably less than 0.5 kNsm⁻², more preferably less than 0.38 kNsm⁻², especially less than 0.25 kNsm⁻².

Said first polymeric material may have a tensile strength, measured in accordance with ASTM D790 of at least 40 MPa, preferably at least 60 MPa, more preferably at least 80 MPa. The tensile strength is preferably in the range 80-110 MPa, more preferably in the range 80-100 MPa.

Said first polymeric material may have a flexural strength, measured in accordance with ASTM D790 of at least 145 MPa. The flexural strength is preferably in the range 145-180 MPa, more preferably in the range 145-165 MPa.

Said first polymeric material may have a flexural modulus, measured in accordance with ASTM D790, of at least 2 GPa, preferably at least 3GPa, more preferably at least 3.5 GPa. The flexural modulus is preferably in the range 3.5-4.5 GPa, more preferably in the range 3.5-4.1 GPa.

Said first polymeric material may have a tensile strength, measured in accordance with ASTM D790 of at least 20 MPa, preferably at least 60 MPa, more preferably at least 80 MPa. The tensile strength is preferably in the range 80-110 MPa, more preferably in the range 80-100 MPa.

Said first polymeric material may have a flexural strength, measured in accordance with ASTM D790 of at least 50 MPa, preferably at least 100 MPa, more preferably at least 145 MPa. The flexural strength is preferably in the range 145-180MPa, more preferably in the range 145-164 MPa.

Said first polymeric material may have a flexural modulus, measured in accordance with ASTM D790, of at least 1 GPa, suitably at least 2 GPa, preferably at least 3 GPa, more preferably at least 3.5 GPa. The flexural modulus is preferably in the range 3.5-4.5 GPa, more preferably in the range 3.5-4.1 GPa.

Said first polymeric material may be a homopolymer having a repeat unit of general formula 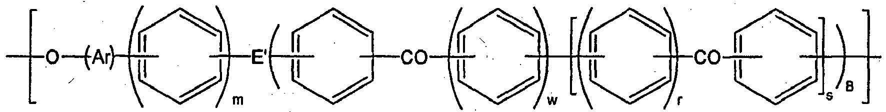 or a homopolymer having a repeat unit of general formula 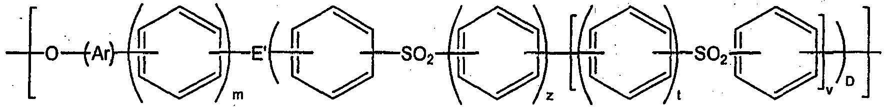 or a random or block copolymer comprising a unit of IV or V (preferably comprising at least two different units of IV and/or V)
wherein B represents 0 or 1, D represents 0 or 1, E' represents an oxygen atom or a direct link, m represents 0 or 1, w, r, s, z, t and v independently represent 0 or 1 and Ar is selected from one or more of the following moieties which is bonded via one or more of its phenyl moieties to adjacent moieties

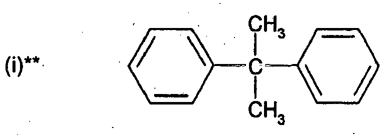

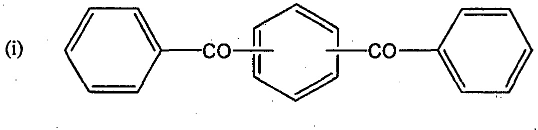

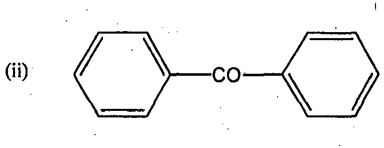

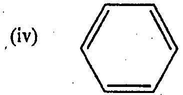

Unless otherwise stated in this specification, a phenyl moiety suitably has 1,4-, linkages to moieties to which it is bonded.

In (i), the middle phenyl may be 1,4- or 1,3-substituted. It is preferably 1,4-substituted.

Preferably Ar is selected from one or more of the following moieties which is bonded via one or more of the bonds extending from the phenyl, moieties to adjacent moieties.

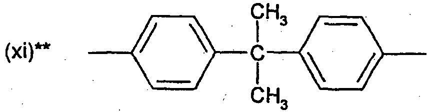

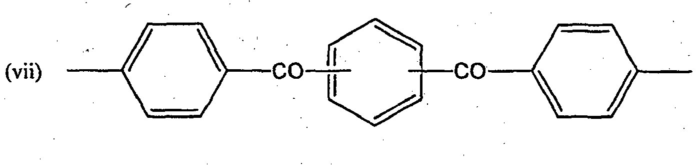

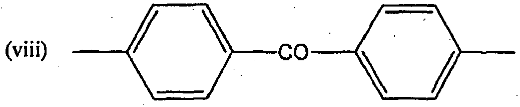

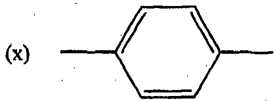

In (vii), the middle phenyl may be 1,4- or 1,3-substituted. It is preferably 1,4-substituted.

Preferred first polymeric materials may be homopolymers or copolymers (preferably homopolymers) of formula IV or V having substituents as detailed in the table below.

| Formula | Ar | m | E' | w | r | B | s | z | t | v | D |
|---|---|---|---|---|---|---|---|---|---|---|---|
| IV | (iv) | 0 | oxygen | 1 | | 1 | 0 | | | | |
| IV | (ii) | 0 | direct link | | | 0 | | | | | |
| IV | (ii) | 0 | oxygen | 1 | 0 | 1 | 1 | | | | |
| IV | (i) | 0 | direct link | 0 | 0 | 0 | 0 | | | | |
| IV | (iv) | 0 | oxygen | 0 | 1 | 1 | 1 | | | | |
| IV | (iv) | 1 | oxygen | 1 | 0 | 1 | 0 | | | | |
| IV | (iv) | 1 | oxygen | 1 | 0 | 1 | 1 | | | | |
| V | (i)** | 0 | oxygen | | | | | 1 | 0 | 0 | 1 |
| V | (iv) | 0 | oxygen | | | | | 1 | - | 0 | 1 |
| V | (ii) | 0 | Direct link | | | | | | | | 0 |
| V | (iv) | 1 | oxygen | | | | | 1 | 0 | 0 | 1 |
| V | (iv) | 1 | oxygen | | | | | 1 | 1 | 1 | 1 |

Said first polymeric material may be amorphous or semicrystalline.

Said first polymeric material is preferably semicrystalline. The level and extent of crystallinity in a polymer is preferably measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calerimetry (DSC).

The level of crystallinity in said first polymeric material may be at least 1%, suitably at least 3%, preferably at least 5% and more preferably at least 10%. In especially preferred embodiments, the crystallinity may be greater than 30%, more preferably greater than 40%, especially greater than 45%.

The main peak of the melting endotherm (Tm) for said first polymeric material (if crystalline) may be at least 300°C.

Said first polymeric material preferably comprises, more preferably consists essentially of, a repeat unit of formula (XX) 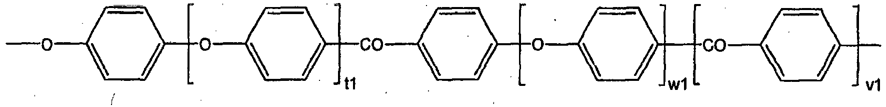 where t1, and w1 independently represent 0 or 1 and v1 represents 0, 1 or 2. Preferred polymeric materials have a said repeat unit wherein t1=1, v1=0 and w1=0; t1=0, v1=0 and w1=0; t1=0, w1=1, v1=2; or t1=0, v1=1 and w1=0. More preferred have t1=1, v1=0 and w1=0; or t1=0, v1=0 and w1=0. The most preferred has t1=1, v1=0 and w1=0.

In preferred embodiments, said first polymeric material is selected from polyetheretherketone, polyetherketone, polyetherketoneetherketoneketone, polyetheretherketoneketone and polyetherketoneketone. In a more preferred embodiment, said polymeric material is selected from polyetherketone and polyetheretherketone. In an especially preferred embodiment, said polymeric material is polyetheretherketone.

Said first polymeric material may make up at least 60wt%, suitably at least 70wt%, preferably at least 80wt%, more preferably at least 90wt%, especially at least 95wt%, of the total amount of thermoplastic polymer(s) in said composition. Preferably, substantially the only thermoplastic polymer in said composition is said first polymeric material.

Suitably, said composition includes at least 80wt%, preferably at least 90wt%, more preferably at least 95wt%, especially at least 99wt% of said first polymeric material, especially preferred being a polymer of formula (XX) referred to above.

Said first polymeric material is preferably of a type which includes:
(a) phenyl moieties;
(b) ketone and/or sulphone moieties; and
(c) ether moieties.

Said bearing structure preferably includes a substrate provided with a layer defined by said composition. Said substrate preferably includes a material which is different to said composition of said layer. Said substrate may comprise (e.g. at least 70wt%, 80wt%, or 90wt% comprises) for example consists essentially of, a metal, for example steel.

For example, said layer may comprise a coating layer on the substrate, wherein said coating layer suitably consists essentially of said composition described.

A layer defined by said composition may have a coat weight of at least 1.0mg/cm², preferably at least 1.2mg/cm². The coat weight may be less than 20mg/cm².

The layer may include at least 1.0mg, preferably at least 1.2mg of said first polymeric material per cm² of said layer. The layer may include less than 20mg of said first polymeric material per cm² of said layer.

Said layer may have a minimum thickness (measured across its whole extent) of 1µm, suitably of at least 5 µm, preferably of at least 8µm.

Said layer may have a maximum thickness (measured across its whole extent) of less than 150µm, preferably less than 100 µm, more preferably less than 50 µm, especially less than 25µm.

Said layer may have an average thickness measured over its whole extent in the range 10 to 150µm.

Said minimum/maximum thicknesses may be measured using a Sheen Eco Test Plus BFN Coating Thickness Gauge Type 121-17-00 from Sheen Instruments Ltd.

Said layer may have a total weight of at least 1mg, preferably at least 5mg, more preferably at least 10mg.

Said layer may include at least 1mg, preferably at least 10mg, especially at least 1g of said first polymeric material.

The bearing structure may include at least 10mg, preferably at least 500mg, especially at least 1g of said first polymeric material.

Said composition which defines said outer surface may include greater than 50wt%, greater than 75wt%, greater than 90wt%, greater than 95wt%, greater than 98wt% of said first polymeric material.

Properties of said outer surface may be adjusted by including materials in said composition in addition to said first polymeric material.

Said composition may include a second polymeric material. A said second polymeric material may be selected from a fluorocarbon resin or a polymeric material as described above comprising:
(a) phenyl moieties;
(b) ketone and/or sulphone moieties; and
(c) ether moieties.

When said second polymeric material comprises a fluorocarbon resin, said resin may comprise perfluoroalkoxy tetrafluoroethylene (PFA), polytetrafluoroethylene (PTFE) or tetrafluoroethylene-hexafluoropropylene copolymer resin (FEP).

A perfluoroalkoxy polymer (herein referred to as PFA) may be represented by the following general Formula: 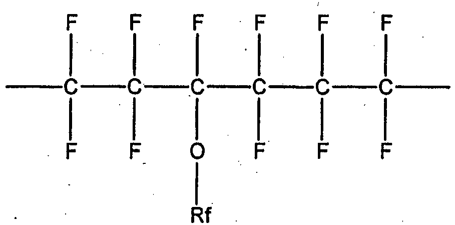 wherein Rf is a fluoroalkyl group (so -O-Rf is a perfluoroalkoxy group).

A tetrafluoroethylene/hexafluoropropylene copolymer (herein referred to as FEP) may be represented by the following general formula:

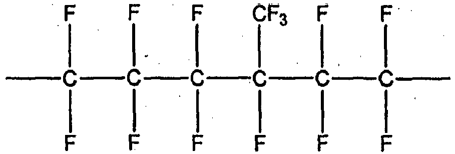

Among commercially available FEPs, those copolymers having a hexafluoropropylene content of from 18 to 25% by weight are preferably used.

Said composition may include a filler means. Said filler means may be particulate and/or may comprise nano fibres, nano tubes or other nano fillers. Examples of fillers include glass particles, ceramic particles, metallic particles, mineral particles and pigments. Specific examples include glass beads or microspheres, silica particles, carbon black, titanium dioxide particles, barium titanate particles, molybdenum disulphide and mica.

When said composition does not consist essentially of a said first polymeric material, it preferably includes a said fluorocarbon resin (especially PTFE), graphite and/or molybdenum disulphide. Said composition may also include a pigment for example carbon black.

The sum of the amount of said second polymeric material and filler means in said composition may be in the range 0 to 50wt%, preferably 0 to 25wt%, more preferably 0 to 10wt%, especially 0 to 5%.

Said composition preferably includes 60-100wt% of said first polymeric material (especially polyetheretheketone), 0-40wt% of a second polymeric material as described and 0-10wt% of filler means as described. Said composition preferably includes at least 70wt% of said first polymeric material (especially polyetheretheketone) and the sum of the amount of second polymer material and filler means is in the range 0-30wt%. Preferably, said second polymeric material and filler means are selected from fluoropolymers (especially PTFE), graphite and molybdenum disulphide.

In an especially preferably embodiment, said composition includes at least 90wt% polyetheretherketone. The composition may consist essentially of polyetheretheketone and pigment (e.g. carbon black) at a level to provide the composition in a desired colour.

Said bearing structure is preferably arranged to engage a first part for example to fit within an opening (e.g. a circular opening) in said first part, (such as within an inner raceway such as of a connection rod). The first part is preferably arranged to be mounted for rotational movement relative to the structure. Said structure is preferably arranged to engage a second part for example by the second part (which may have a circular cross-section) fitting within an opening within said bearing structure. The second part may be arranged to be mounted for rotational movement relative to the structure and may comprise a pin such as a crank pin. Suitably, said first and second parts are arranged to move independently of one another in use when mounted as described.

Said outer surface of said structure preferably faces outwardly. It preferably comprises a surface which may contact (and therefore cause and/or be susceptible to wear as a result thereof) another part for example said first part described above (when provided).

Said structure is preferably substantially annular. Said outer surface preferably faces radially outwardly. Said outer surface preferably extends around (preferably substantially 360° around) a rotational axis of the structure.

Said outer surface may be arranged to accommodate movable elements of a bearing. For example, it may be arranged to accommodate movable elements which are rotatable. Such movable elements may have axes of rotation which extend substantially parallel to a rotational axis of the structure around which said outer surface extends. Said outer surface may include elongate slots for accommodating moveable elements as aforesaid.

The outer surface may include regions (suitably which extend around the rotational axis of the structure) at respective ends of said elongate slots. The regions may define lands at the ends of said slots. Said regions may contact (and therefore cause and/or be susceptible to wear as a result thereof) another part for example said first part as described above (when provided). The outer surface of said regions is defined by a coating of said composition.

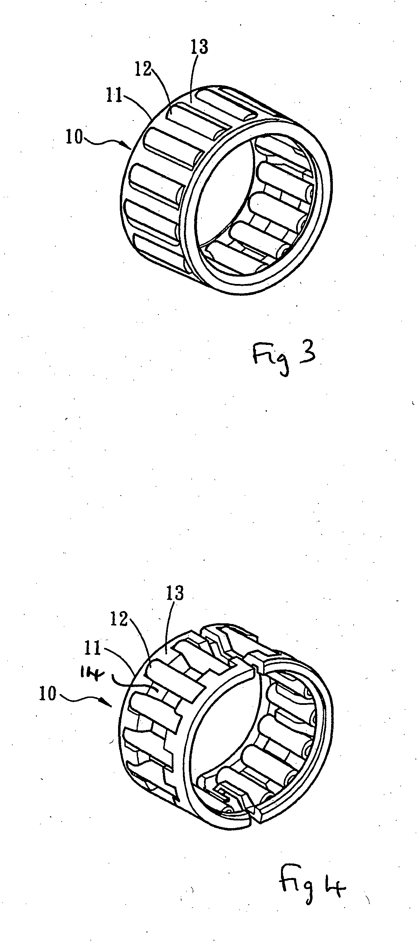

In one embodiment (represented in figures 3 and 4 hereinafter) said regions at respective ends may be part of a smooth outer surface which is only interrupted by slots arranged to accommodate movable elements. In another embodiment (represented in figures 2 and 4 hereinafter) said regions at respective ends may be spaced apart from depressions in the outer surface.

In a preferred embodiment substantially the entirety of the outer surface of the bearing structure is defined by a coating of said composition.

Said bearing structure may include a radially outwardly facing outer surface as described, an inner surface which suitably faces in an opposite direction to said outer surface; and respective side surfaces which suitably face in a direction which is transverse to said outer surface for example in the direction of a rotational axis of the structure. Preferably, said radially outwardly facing outer surface is provided with a coating of said composition, preferably so that substantially the entirety of the outer surface is defined by said composition. Preferably, in addition, said inner surface is provided with a coating of said composition, preferably so that substantially the entirety of the inner surface is defined by said composition. Preferably, said respective side surfaces are provided with a coating of said composition, preferably so that substantially the entirety of the side surfaces are defined by said composition. Preferably, substantially the entirety of said bearing structure is defined, for example provided with a coating of, said composition.

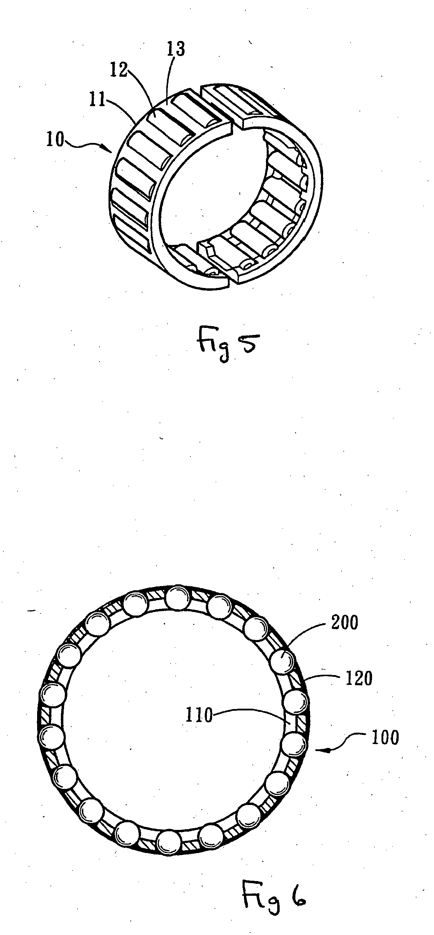

In one embodiment, said bearing structure may comprise an endless annular structure (as in figures 3 and 5 described). In another embodiment, said structure may comprise an interrupted (e.g. split ring) annular structure (as in figures 2 and 4)

The bearing structure, i.e. the cage for a roller bearing, has movable elements, (for example rollers) having a diameter of 6mm or less (referred to as "needle rollers" which are used in needle roller bearings).

According to a third aspect of the invention, there is provided a method of making an assembly as described in claim 13.

Said composition may include a said first polymeric material having a D₅₀ of less than 100µm, suitably less than 60µm, preferably less than 40µm, more preferably less than 20µm, especially less than 10µm. The D₅₀ may be greater than 1µm. Said first polymeric material may have a D₉₀ of less than 50µm, preferably less than 40µm, more preferably less than 30µm, especially less than 20µm. Said first polymeric material may have a D₉₉ of less than 60µm, preferably less than 50µm, more preferably less than 40µm, especially less than 30µm.

D₅₀, D₉₀ and D₉₉ referred to herein may be measured by laser diffraction, for example using a Sympatece Helos (HO476) RODOS Analyser with Windocs Software from Sympatece GmbH, Germany.

Preferably, at least 1.0g, more preferably at least 1.2g, per cm² of said first polymeric material is applied in said method to form said outer surface.

Preferably, the method involves contacting said bearing structure with a spray which comprises said composition.

The method may involve contacting the bearing structure with a powder which includes said first polymeric material or contacting the substrate with a liquid which includes said first polymeric material. When a powder is used, it is preferred that the bearing structure is at a temperature above ambient temperature at the time of contact with said composition. Suitably, the substrate may be at a temperature of greater than 100°C; preferably greater than 200°C, more preferably greater than 300°C, especially greater than 350°C, at the time of contact with said composition.

When a liquid is contacted with said bearing structure, said liquid and/or said bearing structure may be at a temperature in the range 10°C to 50°C at the time the substrate and first polymeric material are contacted.

Preferably, the method involves subjecting the bearing structure, after it has been contacted with said composition, to an environment wherein the temperature is at least 100°C, preferably at least 200°C, more preferably at least 300°C, and especially at least 350°C. The temperature is suitably selected to cause said first polymeric material to fuse. The temperature is suitably selected so that said first polymeric material is not degraded or otherwise detrimentally affected. Suitably, the temperature is less than 500°C, more preferably less than 450°C.

The method may be used to prepare an outer surface having a total weight of at least 1mg, preferably at least 5mg, more preferably at least 10mg, after said first polymeric material has been fused as described.

Preferably, in the method, a layer is formed which has a minimum thickness of 5µm, preferably 8µm, after said first polymeric material has been fused has described.

The method may be used to apply multiple layers of said composition.

Said moveable elements are arranged to rotate relative to, for example within, the structure. Said movable elements may be arranged around substantially the entire extent of the outer surface of the structure. Said movable elements may be arranged to project from the outer surface. They may also be arranged to project from an inner surface of the structure which inner surface faces in an opposite direction to said outer surface.

Said movable elements suitably include outer surfaces arranged to contact a surface and roll over the surface in use. Outer surfaces of said movable elements are preferably defined by a material which is different to the composition which defines the outer surface of the bearing structure. Outer surfaces of said movable elements preferably do not include a coating which comprises a polymeric material of a type which includes:
(a) phenyl moieties;
(b) ketone and/or sulphone moieties; and
(c) ether moieties
as described in the first aspect.

Said movable elements may comprise a metal.

Said movable elements comprise balls or rollers. For example balls may be mounted and retained within the structure. Preferably, said movable elements comprise rollers each of which is suitably mounted for rotation about a respective axis. The rollers may have a circular cross-section. They may be tapered. Preferably, the cross-section is substantially constant along the extent of the rollers. Said rollers are preferably substantially cylindrical.

Said movable elements, for example rollers may have a length (1) and an outer diameter (d) wherein the ratio 1/d is greater than 2, suitably greater than 3, preferably greater than 4, especially greater than 5. The outer diameter suitably refers to the maximum diameter of the movable elements.

Said bearing is preferably a roller bearing, wherein said structure comprises a cage and said movable elements comprise rollers. The bearing may be a needle roller bearing comprising needle rollers having diameters of 6mm or less or may comprise a bearing with rollers having diameters of greater than 6mm.

In a preferred embodiment, there is provided a method of making an assembly according to claim 1, comprising
(i) selecting the bearing structure;
(ii) selecting a multiplicity of movable elements;
(iii) mounting the movable elements in the structure, for example within slots which interrupt the outer surface of the structure.

The assembly may be such that, in use, the outer surface of the bearing structure may be urged towards and/or against said surface which defines the opening, for example under a centrifugal force. This may risk the outer surface of the bearing structure and the surface which defines the opening becoming worn. However, advantageously, a bearing structure comprising a composition as described herein may have a lower tendency to wear and cause wear than hitherto and may therefore extend the useful life of the bearing and said first part.

The assembly may additionally include a second part which is mounted for rotational movement relative to the bearing structure and is suitably independent of said first part.

The second part may be arranged to extend with an opening in the bearing, suitably with movable elements of the bearing abutting and suitably being arranged to roll over a surface of said second part.

Said first part may comprise a circular cross-section opening. It may define an inner raceway and may be associated with a connecting member for example a connecting rod.

Said second part may comprise a circular cross-section and may be cylindrical. It may comprise a crank pin.

The assembly may comprise a crank shaft and connection rod assembly.

The assembly may include said first and second parts which are suitably associated with said bearing and which suitable rotate about the same axis of rotation. The assembly may include an axle, for example of a crank shaft, which is suitably arranged to rotate about an axis which is not coincident with the axis of rotation of said first and second parts. The axle may be arranged to rotate about an axis which is offset relative to (preferably which extends substantially parallel to) the axis of rotation of said first and second parts.

Said assembly may be for an internal combustion engine. Said assembly may include a plurality of needle roller bearings.

In a preferred embodiment, an internal combustion engine includes an assembly as described herein.

Specific embodiments of the invention will now be described by way of example, with reference to the accompanying drawings, in which:
Figure 1 is an exploded view of a roller bearing in association with a crankshaft/connecting rod mechanism as described above;
Figures 2 to 5 are respective perspective views of roller bearings of different constructions, as described above;
Figure 6 is a cross-section through a roller bearing in accordance with a preferred embodiment of the present invention.

Referring to figure 6, a cage 100 includes a body 110 to hold the rolling elements 200. The rolling elements 200 may be needle rollers having a diameter smaller than 6mm or rollers having a diameter greater than 6mm. In addition, the body 110 has the outer surface covered by a polyetheretherketone (PEEK) containing coating layer 120 which is formed at a thickness between 1µm and 50µm. Moreover, additive(s) may be added to the coating layer, such as PTFE, graphite, MoS₂ or a compound thereof. A pigment such as carbon black may also be added for aesthetic purposes.

The body 110 of the cage 100 is annular and can be a one piece type with recesses in its outer surface, a one piece type with a flat outer surface, a split type, consisting of two semi-circular rings, with recesses in its outer surface or a split type with a flat outer surface, as described with reference to figures 2 to 5.

Compared with the known cages which have an electroplated silver layer on a plated copper layer on an outer surface of the cage, the polyetheretherketone (PEEK) containing coating layer 120 can remain on cage 100 for a longer period of time and can more effectively defer the wear on the outer raceway. This is illustrated below.

For comparison purposes a Test piece A was selected wherein the outer surface of the cage was electroplated with copper at a thickness of 10µm and further electroplated with silver at a thickness of 10µm, with the total plating layer at a thickness of 20µm.

A Test piece B having a polyetheretherketone (PEEK) coating layer 120 at a thickness of 10µm was prepared as follows:

A dispersion comprising polyetheretherketone, Aerosol OT75E, carbon black and water was used to coat the outer surface of the cage to define the 10µm coating layer 120 using the procedure described in PCT/GB2004/003710 published as WO-A-2005/023893. Test pieces A and B were formed into bearings by incorporation of rollers and were assembled in a raceway and tested under the following test conditions:

The bearing was rotated at 9000RPM, the centrifugal force of the cage exerted on the outer raceway was 95 Newtons, the relative speed between the cage and the outer raceway was 7.2 m/sec, lubrication oil temperature was 80°C, and the hardness of the bearing outer raceway was HV720-750

Test results after 100 hours testing were as follows:
1. Test piece A: The plated silver layer on the outer surface of the cage had been totally worn out, and a portion of the plated copper layer had been worn out also. The maximum wear on the bearing outer raceway was about 2µm.
2. Test piece B: The Polyetheretherketones (PEEK) containing coating layer on the outer surface of the cage remained intact, and the maximum wear on the bearing outer raceway was less than 1µm.

The test results indicate that the polyetheretherketones (PEEK) coating layer 120 can remain on the outer surface of the cage longer than the conventional copper plus silver plating. Also, the polyetheretherketones (PEEK) containing coating layer can more effectively defer wear on the outer raceway.

## Claims

1. An assembly comprising:
a) a bearing which comprises a bearing structure (100) which is a cage for a roller bearing, said bearing structure being in combination with moveable elements (200) in the form of balls or rollers, wherein said bearing structure supports the moveable elements;
b) a first part (20) comprising an opening (21) within which the bearing is arranged with said moveable elements abutting a surface which defines the opening; **characterised in that** an outer surface (120) of the bearing structure which may be urged towards and/or against said surface which defines said opening in use is defined by a substrate provided with a coating layer defined by a composition, wherein said coating layer comprises a first polymeric material having a Rockwell hardness, M scale, in the range 80 to 130.

2. An assembly according to claim 1, wherein said first polymeric material is selected from a polyamide, polyetherimide (PEI), polyacetal, polyester, polycarbonate, polyphenylene sulphide or a polymeric material of a type which includes:
(a) phenyl moieties;
(b) ketone and/or sulphone moieties; and
(c) ether moieties; wherein for example said first polymeric material is a homopolymer having a repeat unit of general formula 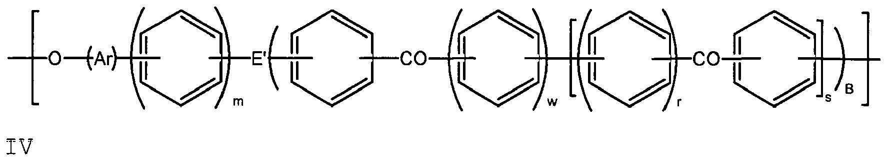
or a homopolymer having a repeat unit of general formula 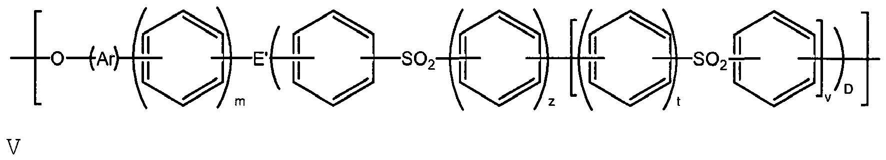 or a random or block copolymer comprising a unit of IV or V, wherein B represents 0 or 1, D represents 0 or 1, E' represents an oxygen atom or a direct link, m, w, r, s, z, t and v independently represent 0 or 1
and Ar is selected from the following moieties and is bonded via one or more of its phenyl moieties to adjacent moieties

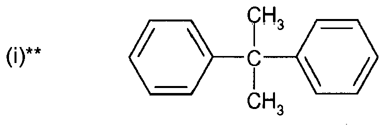

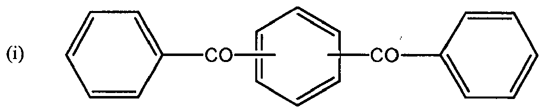

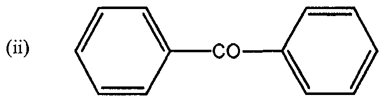

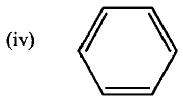

3. An assembly according to any preceding claim, wherein said first polymeric material comprises a repeat unit of formula (XX) 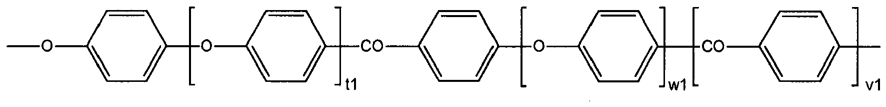 where t1 and w1 independently represent 0 or 1 and v1 represents 0, 1 or 2 and is, for example, selected from polyetheretherketone and polyetherketone.

4. An assembly according to any preceding claim, wherein said substrate is of a different material compared to said layer, wherein said layer consists essentially of said composition.

5. An assembly according to any preceding claim, wherein said composition includes a second polymeric material selected from a fluorocarbon resin or a polymeric material of a type which includes:
(a) phenyl moieties;
(b) ketone and/or sulphone moieties; and
(c) ether moieties.

6. An assembly according to any preceding claim, wherein said composition comprises a said first polymeric material in combination with a fluorocarbon resin, graphite and/or molybdenum disulphide.

7. An assembly according to any preceding claim, wherein said composition includes 60 to 100wt% of said first polymeric material, 0 to 40wt% of a second polymeric material and 0 to 10wt% of filler means.

8. An assembly according to any preceding claim, which includes at least 70wt% of said first polymeric material and the sum of the amount of second polymeric material and filler means is in the range 0 to 30wt%, wherein said second polymeric material and filler means are selected from fluoropolymers, graphite and molybdenum disulphide.

9. An assembly according to any preceding claim, wherein said composition includes at least 90wt% of polyetheretherketone.

10. An assembly according to any preceding claim, wherein said movable elements have a diameter of 6mm or less.

11. An assembly according to any preceding claim wherein said movable elements have a length (1) and an outer diameter (d) wherein the ratio 1/d is greater than 2.

12. An assembly according to any preceding claim, wherein said movable elements comprise rollers.

13. A method of making an assembly as described in any of claims 1 to 12, the method comprising:
(a) selecting the bearing structure for supporting the movable elements and having an outer surface which is not defined partially or completely by a said composition as described in any of claims 1 to 12;
(b) contacting said selected bearing structure with a composition as described in any of claims 1 to 12 so that an outer surface of said bearing structure is defined at least in part by said composition.

## Patentansprüche

1. Baugruppe, umfassend:
a) ein Lager, das eine Lagerstruktur (100) umfasst, die ein Käfig für ein Rollenlager ist, wobei die Lagerstruktur in Kombination mit beweglichen Elementen (200) in der Form von Kugeln oder Rollen ist, wobei die Lagerstruktur die beweglichen Elemente trägt;
b) ein erstes Teil (20), umfassend eine Öffnung (21), innerhalb derer das Lager angeordnet ist, wobei die beweglichen Elemente an einer Oberfläche, die die Öffnung definiert, anliegen; **dadurch gekennzeichnet, dass** eine äußere Oberfläche (120) der Lagerstruktur, die in Verwendung in Richtung auf und/oder gegen die Oberfläche, die die Öffnung definiert, gedrückt werden kann, definiert ist durch ein Substrat, das mit einer durch eine Zusammensetzung definierte Überzugsschicht versehen ist, wobei die Überzugsschicht ein erstes Polymermaterial mit einer Rockwellhärte im Bereich von 80 bis 130, M-Skala, umfasst.

2. Baugruppe gemäß Anspruch 1, wobei das erste Polymermaterial ausgewählt ist aus einem Polyamid, Polyetherimid (PEI), Polyacetal, Polyester, Polycarbonat, Polyphenylensulfid oder einem Polymermaterial eines Typs, der enthält:
(a) Phenyleinheiten;
(b) Keton- und/oder Sulfoneinheiten; und
(c) Ethereinheiten; wobei beispielsweise das erste Polymermaterial ein Homopolymer mit einer Wiederholungseinheit der allgemeinen Formel 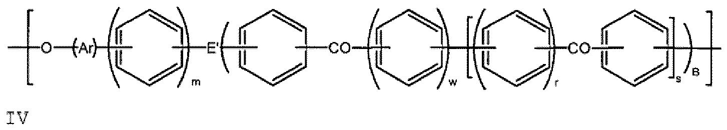 oder ein Homopolymer mit einer Wiederholungseinheit der allgemeinen Formel 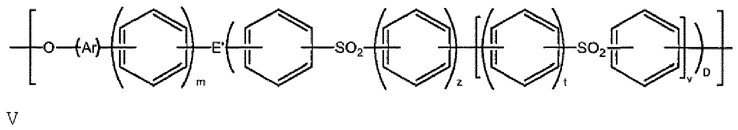 oder ein statistisches oder Blockcopolymer umfassend eine Einheit von IV oder V ist, wobei B 0 oder 1 darstellt, D 0 oder 1 darstellt, E' ein Sauerstoffatom oder eine direkte Bindung darstellt, m, w, r, s, z, t und v unabhängig 0 oder 1 darstellen,
und Ar ausgewählt ist aus den folgenden Einheiten und über eine oder mehrere seiner Phenyleinheiten an benachbarte Einheiten gebunden ist,

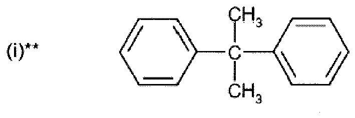

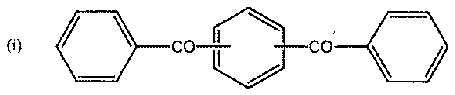

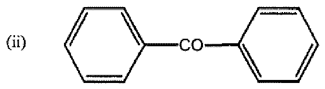

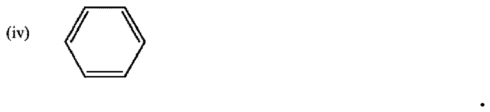

3. Baugruppe gemäß einem der vorstehenden Ansprüche, wobei das erste Polymermaterial eine Wiederholungseinheit der Formel (XX) umfasst, 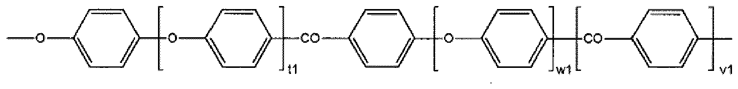 wobei t1 und w1 unabhängig 0 oder 1 darstellen und v1 0, 1 oder 2 darstellt, und beispielsweise ausgewählt ist aus Polyetheretherketon und Polyetherketon.

4. Baugruppe gemäß einem der vorstehenden Ansprüche, wobei das Substrat aus einem von der Schicht verschiedenen Material besteht, wobei die Schicht im Wesentlichen aus der Zusammensetzung besteht.

5. Baugruppe gemäß einem der vorstehenden Ansprüche, wobei die Zusammensetzung ein zweites Polymermaterial umfasst, ausgewählt aus Fluorkohlenstoffharz und einem Polymermaterial eines Typs, der enthält:
(a) Phenyleinheiten;
(b) Keton- und/oder Sulfoneinheiten; und
(c) Ethereinheiten.

6. Baugruppe gemäß einem der vorstehenden Ansprüche, wobei die Zusammensetzung das erste Polymermaterial in Kombination mit einem Fluorkohlenstoffharz, Graphit und/oder Molybdändisulfid umfasst.

7. Baugruppe gemäß einem der vorstehenden Ansprüche, wobei die Zusammensetzung 60 bis 100 Gew.-% an dem ersten Polymermaterial, 0 bis 40 Ges.-% an einem zweiten Polymermaterial und 0 bis 10 Gew.-% an einem Füllstoffmittel enthält.

8. Baugruppe gemäß einem der vorstehenden Ansprüche, die wenigstens 70 Gew.-% an dem ersten Polymermaterial enthält und die Summe der Mengen des zweiten Polymermaterials und des Füllstoffmaterials im Bereich von 0 bis 30 Gew.-% liegt, wobei das zweite Polymermaterial und das Füllstoffmaterial ausgewählt sind aus Fluorpolymeren, Graphit und Molybdändisulfid.

9. Baugruppe gemäß einem der vorstehenden Ansprüche, wobei die Zusammensetzung wenigstens 90 Gew.-% an Polyetheretherketon enthält.

10. Baugruppe gemäß einem der vorstehenden Ansprüche, wobei die beweglichen Elemente einen Durchmesser von 6 mm oder weniger aufweisen.

11. Baugruppe gemäß einem der vorstehenden Ansprüche, wobei die beweglichen Elemente eine Länge (1) und einen Außendurchmesser (d) aufweisen, wobei das Verhältnis 1/d größer als 2 ist.

12. Baugruppe gemäß einem der vorstehenden Ansprüche, wobei die beweglichen Elemente Rollen umfassen.

13. Verfahren zum Herstellen einer Baugruppe gemäß einem der Ansprüche 1 bis 12, wobei das Verfahren umfasst:
(a) Auswählen der Lagerstruktur zum Tragen der beweglichen Elemente, die eine Außenoberfläche aufweist, die nicht teilweise oder vollständig durch die Zusammensetzung gemäß einem der Ansprüche 1 bis 12 definiert ist;
(b) Inkontaktbringen der ausgewählten Lagerstruktur mit einer Zusammensetzung gemäß einem der Ansprüche 1 bis 12, so dass eine Außenoberfläche der Lagerstruktur zumindest teilweise durch die Zusammensetzung definiert wird.

## Revendications

1. Ensemble comprenant:
a) un palier qui présente une structure portante (100) qui est une cage pour un roulement à rouleaux, ladite structure portante étant combinée à des éléments mobiles (200) sous la forme de billes ou de rouleaux, dans lequel ladite structure portante supporte les éléments mobiles;
b) une première pièce (20) comportant une ouverture (21) à l'intérieur de laquelle le palier est agencé avec lesdits éléments mobiles en contact avec une surface qui définit l'ouverture;
**caractérisé en ce qu'**une surface extérieure (120) de la structure portante qui peut être poussée vers et/ou contre ladite surface qui définit ladite ouverture en service est définie par un substrat muni d'une couche de revêtement définie par une composition, dans lequel ladite couche de revêtement comprend une première matière polymère présentant une dureté Rockwell, échelle M, de l'ordre de 80 à 130.

2. Ensemble selon la revendication 1, dans lequel ladite première matière polymère est sélectionnée parmi un polyamide, un polyétherimide (PEI), un polyacétal, un polyester, un polycarbonate, le sulfure de polyphénylène ou une matière polymère d'un type qui comprend:
(a) des fractions phényle;
(b) des fractions cétone et/ou sulfone; et
(c) des fractions éther;
dans lequel ladite première matière polymère est par exemple un homopolymère ayant une unité répétitive de la formule générale 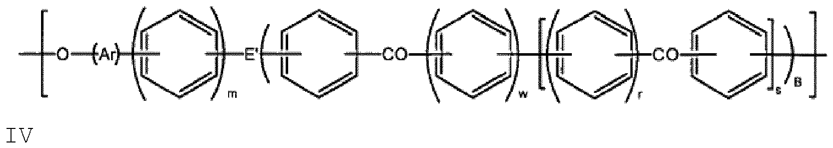 ou un homopolymère ayant une unité répétitive de la formule générale 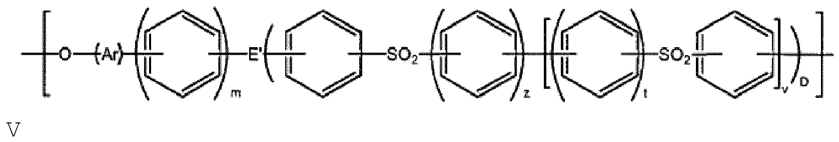 ou un copolymère aléatoire ou bloc comprenant une unité de IV ou V, dans lesquelles B représente 0 ou 1, D représente 0 ou 1, E' représente un atome d'oxygène ou une liaison directe, m, w, r, s, z, t et v représentent indépendamment l'un de l'autre 0 ou 1
et Ar est sélectionné dans les fractions suivantes et est lié par une ou plusieurs de ses fractions phényle à des fractions adjacentes

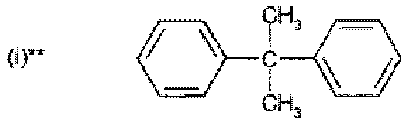

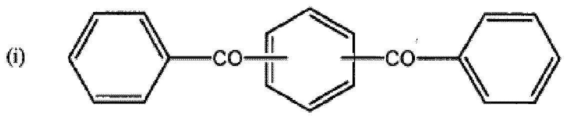

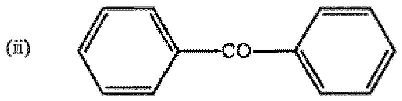

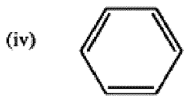

3. Ensemble selon l'une quelconque des revendications précédentes, dans lequel ladite première matière polymère comprend une unité répétitive de la formule (XX) 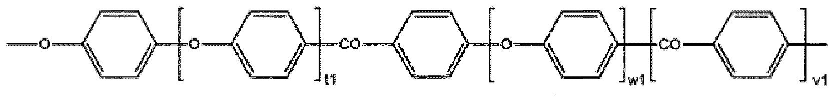 dans laquelle t1 et w1 représentent indépendamment l'un de l'autre 0 ou 1 et v1 représente 0, 1 ou 2 et est, par exemple, sélectionné parmi la polyétheréthercétone et la polyéthercétone.

4. Ensemble selon l'une quelconque des revendications précédentes, dans lequel ledit substrat est constitué d'un matériau différent comparé à ladite couche, dans lequel ladite couche est constituée essentiellement de ladite composition.

5. Ensemble selon l'une quelconque des revendications précédentes, dans lequel ladite composition comprend une deuxième matière polymère sélectionnée parmi une résine fluorocarbonée ou une matière polymère d'un type qui comprend:
(a) des fractions phényle;
(b) des fractions cétone et/ou sulfone; et
(c) d'autres fractions.

6. Ensemble selon l'une quelconque des revendications précédentes, dans lequel ladite composition comprend ladite première matière polymère en combinaison avec une résine fluorocarbonée, du graphite et/ou du bisulfure de molybdène.

7. Ensemble selon l'une quelconque des revendications précédentes, dans lequel ladite composition contient 60 à 100 % en poids de ladite première matière polymère, 0 à 40 % en poids d'une deuxième matière polymère et 0 à 10 % en poids de moyens de charge.

8. Ensemble selon l'une quelconque des revendications précédentes, qui contient au moins 70 % en poids de ladite première matière polymère et la somme de la quantité de la deuxième matière polymère et des moyens de charge est comprise dans la plage de 0 à 30 % en poids, dans lequel ladite deuxième matière polymère et les moyens de charge sont sélectionnés parmi les fluoropolymères, le graphite et le bisulfure de molybdène.

9. Ensemble selon l'une quelconque des revendications précédentes, dans lequel ladite composition contient au moins 90 % en poids de polyétheréthercétone.

10. Ensemble selon l'une quelconque des revendications précédentes, dans lequel lesdits éléments mobiles ont un diamètre de 6 mm ou moins.

11. Ensemble selon l'une quelconque des revendications précédentes, dans lequel lesdits éléments mobiles ont une longueur (1) et un diamètre extérieur (d) dont le rapport 1/d est supérieur à 2.

12. Ensemble selon l'une quelconque des revendications précédentes, dans lequel lesdits éléments mobiles comprennent des rouleaux.

13. Procédé de production d'un ensemble selon l'une quelconque des revendications 1 à 12, le procédé comprenant les étapes suivantes:
(a) sélectionner la structure portante pour supporter les éléments mobiles et présenter une surface extérieure qui n'est pas définie partiellement ou entièrement par une composition précitée telle que décrite dans l'une quelconque des revendications 1 à 12;
(b) mettre en contact ladite structure portante sélectionnée avec une composition telle que décrite dans l'une quelconque des revendications 1 à 12 de telle manière qu'une surface extérieure de ladite structure portante soit définie au moins en partie par ladite composition.
